# EUROPEAN PATENT APPLICATION

(11) **EP 2 599 390 A1**
(43) Date of publication of application: **05.06.2013**
(21) Application number: 11009575.9
(22) Date of filing: 03.12.2011
(51) Int. Cl.: A23G 3/34, A23G 1/54, A23G 1/56

(54) **A fiber enriched filling composition for a chocolate product**

(71) Applicant: Cavalier N.V./S.A., 9900 Eeklo (BE)
(72) Inventor: Verdegem, Felix, 9900 Eeklo (BE)
(74) Representative: BiiP cvba

(57) **Abstract**

The present invention is directed to a fiber enriched filling composition for a chocolate product comprising:
a. a steviol glucoside
b. fat
c. fibers
d. a polyol.

Further, the present invention is directed to a chocolate product comprising such filling composition.

## Description

### FIELD OF THE INVENTION

The invention relates to a fiber enriched filling composition for a chocolate product comprising, and to a chocolate product comprising such filling composition.

### BACKGROUND

In the context of increasing pressure on repulsing overweight and diabetes, confectionary product manufacturers attempt to reduce or even replace sucrose content in their products.

An example of the state of the art is for example WO2007059644, wherein chocolate compositions wherein at least 30% by weight of the sucrose content of regular chocolate is replaced by a combination of dietary fibers such as dextrin, inulin and fructo-oligosaccharide.

Another example is WO2006015880 wherein a sugar replacement composition comprising a bulking fiber composition and a high intensity sweetener composition is described.

With respect to fillings for chocolate products, since a huge variety of such fillings is available on the market, it is a big challenge to replace the sucrose content of this variety of fillings while keeping sweetness, organoleptic requirements like mouthfeel, taste and smell, texture, body, processability (laminating extruding, depositing, molding, etc), hygroscopic characteristics, brittleness, granularity, viscosity, fat bloom stability, shelf life, melting behavior, laxative effect, digestibility, etc at least similar or improved compared to conventional sucrose containing fillings.

It has now been surprisingly found that the filling compositions of the present invention formulated with steviol glucoside provide similar or improved characteristics compared to conventional sucrose based fillings.

In addition, the effectiveness of active water regulating compounds such as glycerol for controlling the active water content in low-fat fillings in the presence of steviol glucoside is established. This is required since specifications such as fat bloom stability, shelf life and melting behavior are important product properties of chocolates and fillings that, among others, are influenced by active water content and need to be controlled.

The above is especially important and useful with regards to multi-layered fillings.

Further, it has been found that for praliné type filling compositions the total fiber content present in the praline type filling composition is most effectively processed by at least partial uptake via fiber content present in a chocolate composition.

### SUMMARY OF THE INVENTION

The present invention is directed to a fiber enriched filling composition for a chocolate product comprising:
a. a steviol glucoside
b. fat
c. fibers
d. a polyol.

Further, the present invention is directed to a chocolate product comprising such filling composition.

### DETAILED DESCRIPTION

In a first embodiment, the present invention provides a fiber enriched filling composition for a chocolate product comprising:
a. a steviol glucoside
b. fat
c. fibers
d. a polyol.

The polyol may be selected from erythritol, arabitol, xylitol, sorbitol, glycerol, mannitol, lactitol, maltitol, maltitol syrup, mallitol, isomalt, hydrogenated starch hydrolysate or combinations thereof.

In an embodiment in accordance with the present invention, the polyol comprises glycerol. By using an appropriate amount of glycerol the active water content in low-fat fillings can be controlled.

In an embodiment in accordance with the present invention, a fiber enriched filling is provided wherein the fibers comprise dietary fibers, as for example inuline and/or fructo-oligosaccharide and/or dextrin,

In a particular embodiment in accordance with the present invention the fibers comprise polydextrose and the polyol comprises erythritol and glycerol.

In low-fat fillings, polydextrose may be used in high amount since it is better digestable and has decreased laxative and flatulence effects compared to fructo-oligosaccharide. However, with regards to viscosity the amount of polydextrose is limited. Therefore fructo-oligosaccharide and/or erythritol and/or glycerol may be added.

Preferably, the filling may comprise an amount of 30-50% polydextrose by weight, an amount of 10-20% erythritol by weight and an amount of 4-8% glycerol by weight.

Also preferably, the filling may comprise an amount of 50-70% polydextrose by weight, an amount of 8-12% erythritol by weight, an amount of 8-12% glycerol by weight, and an amount of 10-20% water by weight.

A filling composition according to the present invention may comprise 0,01-1 % steviol glucoside by weight, 1-60% fat, and 0,1-10% inuline by weight and/or 0,1-20% fructo-oligosaccharide by weight. Preferably, it may comprise 0,01-0,2% steviol glucoside by weight, 5-50% fat, and 0,1-4% inuline by weight and/or 10-20% fructo-oligosaccharide by weight.

In a preferred embodiment, the filling composition may comprise 0,01-0,05% steviol glucoside by weight. 5-10% fat, 0.5-3% inuline by weight and 10-20% fructo-oligosaccharide by weight.

In another preferred embodiment, the filling composition may comprise 0,04-0,0.08% steviol glucoside by weight, 15-60% fat, 2-4% inuline by weight and 2-4% fructo-oligosaccharide by weight.

In an embodiment of the fiber enriched filling according to the present invention, the ratio between the amount of inuline and the amount of fructo-oligosaccharide is between 0,8 and 1,2.

In an embodiment of the fiber enriched filling according to the present invention, the ratio between the amount of dextrin and the amount of inulin and/or fructo-oligosaccharide is between 0,8 and 1,2.

The filling composition may further comprise additional fiber content selected from gums, hemicellulose, inulin, lignin, mucilages, oligofructose, pectin, psyllium, resistant maltodextrin or combinations thereof.

The filling composition may further comprise milk solid content selected from whole milk, whole milk powder, skim milk, skim milk powder, condensed whole milk, condensed skim milk, cream, buttermilk, buttermilk powder, whey protein isolate, whey protein concentrate, whey protein hydrolysate, whey powder, evaporated milk, soy milk, soy protein isolate, soy protein concentrate, soy protein hydrolysate, tofu, lactose-free milk, milk replacers or combinations thereof.

In the filling composition according to the present invention, the fat is selected from cocoa butter, chocolate butter, olive oil, soya oil, sunflower oil, rape seed oil, cotton seed oil, maize oil, safflower oil, ground nut oil, sesame oil, palm oil, coconut oil, butter fat, butter, butter cream, and derivatives thereof.

The filling composition may further comprise an emulsifier selected from egg yolk, lecithin, glycerol, mono and diglycerides, polysorbate 80, polysorbates, soy lecithin, propylene glycol monostearate, glyceryl monostearate, or combinations thereof.

The filling composition may further comprise one or more vitamins, minerals, electrolytes, trace elements, oils, health supplements, prebiotics, probiotics, kefir, phytonutrients, botanical, nutraceuticals, herbs, amino acids, acidifiers, buffers, salts and combinations thereof.

The filling composition may further comprise energy-related food ingredients selected from at least one of caffeine, taurine, guarana, B vitamins, ginseng, ginkgo biloba, L-camitine, sugars, anti-oxidants or combinations thereof.

The filling composition may further comprise fruit selected from banana, peach, apricot, lemon, raspberry, strawberry, wild berries, mango, passion fruit, guava, pomegranate, orange, blood orange, pear, lime mandarin, calamansi, pineapple, papaya, lychee, kiwi, coconut, rhubarb, pumpkin, plum, cantaloupe, green apple, fig, wild strawberry, redcurrant, cherry, blueberry, cranberry, blackcurrant, black cherry, watermelon, apple, carrot, grape, lemongrass, pink grapefruit, cassis, and combinations thereof, or bean, cocoa, nut blends and pastes, coffee, fruit purees, fruit juices, fruit pulps, vegetables, spices, caramel, liquor, liqueur, natural and artificial flavours, extracts, and combinations thereof.

Additionally, in an embodiment of the present invention, a chocolate product is provided comprising a filling composition according to any of the above claims. Such chocolate product may be any product (tablet, bar, snack, praline, toffee, pastry, cake, etc.) comprising a chocolate composition and suitable for carrying a filling.

### EXAMPLE 1:

Praliné type filling comprising:
Hazelnut paste 25-35%
cacao butter 10-15%
vegetable fat 5-15%
cacao paste 5-15%
dextrin 4-8%
erythritol 4-8%
inulin 2-4%
fructo-oligosaccharide 2-4%
steviol glycoside 0.04-0.08%
milk powder, whey powder, soya lecithin

### EXAMPLE 2:

Low-fat filling comprising:
polydextrose 30-50%
erythritol 10-20%
fructo-oligosaccharide 10-20%
vegetable fat 5-10%
glycerol % 4-8%
dextrin 1-6%
inulin 0.5-3%
steviol glycoside 0.01-0.05%
milk powder, whey powder, soya lecithin

### EXAMPLE 3:

Multi-layered filling comprising a pralin6 type layer and a fruit jelly type layer, the latter comprising:
Polydextrose 50-70%
fruit powder 5-15%
water 10-20%
erythritol 8-12%
glycerol 8-12%
steviol glycoside 0.01-0.05%

### EXAMPLE 4:

dark mousse/truffle type filling comprising:
concentrated butter 30-50%
cacao paste 15-20%
erythritol 15-20%
dextrin 5-10%
glycerol 3.7%
fructo-oligosaccharide 2-5%
inulin 2-5%
cacao butter 2-5%
steviol glycoside 0.02-0.06%

### EXAMPLE 5:

Milk mousse/truffle type filling comprising:
concentrated butter 30-50%
erythritol 15-20%
cacao butter 5-15%
cacao paste 2-8%
glycerol 3-7%
dextrin 2-6%
inulin 1-3%
fructo-oligosaccharide 1-3%
steviol glycoside 0.02-0.06%
milk powder, whey powder, soya lecithin

### EXAMPLE 6:

white mousse/truffle type filling comprising:
concentrated butter 30-50%
erythritol 16-20%
cacao butter 5-15%
glycerol 3-7%
dextrin 2-6%
inulin 1-3%
fructo-oligosaccharide 1-3%
steviol glycoside 0.02-0.06%
milk powder, whey powder, soya lecithin

### EXAMPLE 7:

ganache dark type filling comprising:
cacao paste 20-30%
cream 40% fat 15-20%
glycerol 5-15%
erythritol 5-15%
dextrin 5-15%
sorbitol 6-10%
concentrated butter 2-8%
fructo-oligosaccharide 2-7%
inulin 2-7%
cacao butter 2-7%
steviol glycoside 0.03-0.07%
soya lecithin

### EXAMPLE 8:

ganache milk type filling comprising:
cream 40% fat 20-25%
cacao butter 10-14%
glycerol 10-14%
erythritol 8-12%
cacao paste 5-10%
sorbitol 5-10%
concentrated butter 3-7%
dextrin 4-6%
inulin 1-3%
fructo-oligosaccharide 1-3%
steviol glycoside 0,03-0,07%
milk powder, whey powder, soya lecithin

## Claims

1. A fiber enriched filling composition for a chocolate product comprising:
a. a steviol glucoside
b. fat
c. fibers
d. a polyol

2. The filling composition according to clam 1, wherein the polyol is selected from erythritol, arabitol, xylitol, sorbitol, glycerol, mannitol, lactitol, maltitol, maltitol syrup, mallitol, isomalt, hydrogenated starch hydrolysate or combinations thereof.

3. The filling composition according to claim 2, wherein the polyol comprises glycerol.

4. A fiber enriched filling according to any of the above claims, wherein the fibers comprise dietary fibers.

5. A fiber enriched filling according to claim 5, wherein the dietary fibers comprise inuline and/or fructo-oligosaccharide.

6. The filling composition according to any of the above claims, wherein the fibers comprise polydextrose and wherein the polyol comprises erythritol and glycerol.

7. The filling composition according to claim 6, comprising an amount of 30-50% polydextrose by weight, an amount of 10-20% erythritol by weight and an amount of 4-8% glycerol by weight.

8. The filling composition according to claim 6, comprising an amount of 50-70% polydextrose by weight, an amount of 8-12% erythritol by weight, an amount of 8-12% glycerol by weight, and an amount of 10-20% water by weight.

9. The filling composition according to any of the above claims, comprising 0,01-1% steviol glucoside by weight, 1-60% fat, and 0,1-10% inuline by weight and/or 0,1-20% fructo-oligosaccharide by weight.

10. The filling composition according to claim 9, comprising 0,01-0,2% steviol glucoside by weight, 5-50% fat, and 0,1-4% inuline by weight and/or 10-20% fructo-oligosaccharide by weight.

11. The filling composition according to claim 9, comprising 0,01-0,05% steviol glucoside by weight, 5-10% fat, 0.5-3% inuline by weight and 10-20% fructo-oligosaccharide by weight.

12. The filling composition according to claim 9, comprising 0,04-0,0.08% steviol glucoside by weight, 15-60% fat, 2-4% inuline by weight and 2-4% fructo-oligosaccharide by weight.

13. A fiber enriched filling according to any of the above claims wherein the ratio between the amount of inuline and the amount of fructo-oligosaccharide is between 0,8 and 1,2.

14. A fiber enriched filling according to any of the above claims wherein the dietary fibers comprise dextrin and inuline and/or fructo-oligosaccharide, and wherein the ratio between the amount of dextrin and the amount of inulin and/or fructo-oligosaccharide is between 0,8 and 1,2.

15. A chocolate product comprising a filling composition according to any of the above claims.
